# EUROPEAN PATENT APPLICATION

(11) **EP 4 381 921 A1**
(43) Date of publication of application: **12.06.2024**
(21) Application number: 23212161.6
(22) Date of filing: 26.11.2023
(51) Int. Cl.: A01B 13/14, A01B 3/38, A01B 63/10, A01B 63/32

(54) **A PLOUGH FOR DEEP TILLAGE**

(30) Priority: 08.12.2022 SI 202200238
(71) Applicant: Rafko Znidaric s.p., 9252 Radenci (SI)
(72) Inventor: ZNIDARIC, Rafko, 9252 Radenci (SI)
(74) Representative: Patentni Biro AF d.o.o.

(57) **Abstract**

The present invention belongs to the field of agricultural machine, more precisely to the field of ploughs for cultvation of agricultural land, in particular vineyards and orchard. The invention relates to a plough for deep tillage configured to allow deep plowing. The essence of the invention is in that the plough is configured to allow the ploughing depth into two depths, wherein it comprises a first board (24) for making a furrow is shorter (allowing usual depth) and a second board (25) for deeper plowing, which is arranged to deepen the already made furrow. The first board (24) thus plows to approximately on half of the final depth, while the second board (25) deepens the already made furrow. Both boards (24, 25) are designed as plates, wherein the lower part of the second board (25), i.e., a share, is elongated. Both boards (24, 25) are installed each on its holder (22, 23), wherein said holders are mounted on a frame (21), which is then through a connecting part installed on the tractor.

## Description

### Field of the invention

The present invention belongs to the field of agricultural machine, more precisely to the field of ploughs for cultvation of agricultural land, in particular vineyards and orchard. The invention relates to a plough for deep tillage.

### Background of the invention and the technical problem

A plough is is a farm tool for preparation of soil before sowing seed or planting. The purpose is to turn the layers of soil, to move the nutritional matter closer to the surface, while weeds and the remains of the previous harvest are moved into lower layers, where they decompose. At the same time, tillage (plowing) improves aeration of soil layers. For deep plowing, particularly of permanent plantations such as vineyards and orchards, single-furrow ploughs are used, which require a large traction force. The quality of plowing with such plough is not satisfactory, as the soil layers are not fully exchanged. This means that the bottom layers of soil rich in minerals does not reach the surface, while the surface soil layers rich in humus does not reach the bottom where younger saplings could take up nutrients.

The technical problem, solved by the present invention, is constructional design of a plow that will enable deep tillage during which the soil in the furrow will exchange in a manner as ideal as possible, so that the surface soil reaches the bottom and the soild from the bottom reaches the surface as completely as possible.

### Prior art

Various ploughs are used for deep tillage, however, all have the above-identified problem. So ploughs are equipped with front ploughs, which are smaller ploughs intended to cut the upper layers of soil comprising grass, weeds, plant remains and similar, which are later turned into the bottom of the already plowed furrow. Front ploughs are mounted in front of the plough board.

### Description of the solution to the technical problem

The present invention addresses the problems of known solutions. The technical problem is solved as defined in the independent claim, while preferred embodiments are defined in dependent claims.

The essence of the present invention is in that the plough is configured to allow the ploughing depth into two depths, wherein it comprises a first board for making a furrow is shorter (allowing usual depth) and a second board for deeper plowing, which is arranged to deepen the already made furrow. The first board thus plows to approximately on half of the final depth, while the second board deepens the already made furrow. Known double-furrow ploughs have the same height, while single-furrow ploughs cannot have different heights at the same time, hence, the invention differs from already known solutions.

Both boards are designed as plates, wherein the lower part of the second board, i.e., a share, is elongated into depth. Both boards are installed each on its holder, wherein said holders are mounted on a frame, which is then through a connecting part installed on the tractor.

At least one board can be adjustable along the height with any suitable mechanism for adjusting height, wherein the ratio between both board heights can also be adjustable. According to a first possible embodiment, the holder is provided with a plurality of openings, so that the board can be screwed into any of these openings on the holder in order to adjust its height. According to a second possible embodiment, the height of boards is adjusted with any hydraulic system.

Plowing with the plough according to the invention is performed in the following manner. During the first passage the plough plows with any board set to make a furrow of the first depth, while during the second passage the second, i.e. the deeper board is used for deepening the previously made furrow to obtain a furrow of the second depth. In the second passage the first board pushes the upper layers of soil into the deepened furrow. The process is repeated until the field is plowed.

The remaining parts of the plough are made in any known manner and are not an object of the invention, as they are well known to the person skilled in the art. The plough for deep tillage is particularly useful for tillage of orchards and/or vineyards.

The plough for deep tillage according to the invention will be described in further details based on exemplary embodiments and figures, which show:
- Figure 1: A tractor with the plough according to the invention shown from the back, wherein two boards of the plough with two different depths are visible
- Figure 2: A schematic view of the tillage depth with the plough according to the invention
- Figure 3: A possible embodiment of the plough, wherein height adjustment is achieved with screwing
- Figure 4: Side view of the plough shown in figure 3
- Figure 5: A possible embodiment of the plough, wherein height adjustment is achieved with a hydraulic system
- Figure 6: Side view of the plough shown in figure 5
- Figure 7: The second board

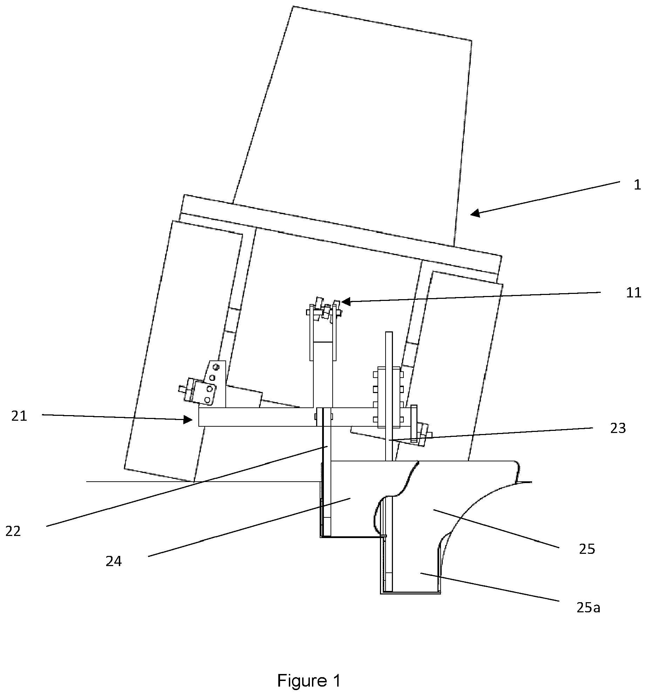

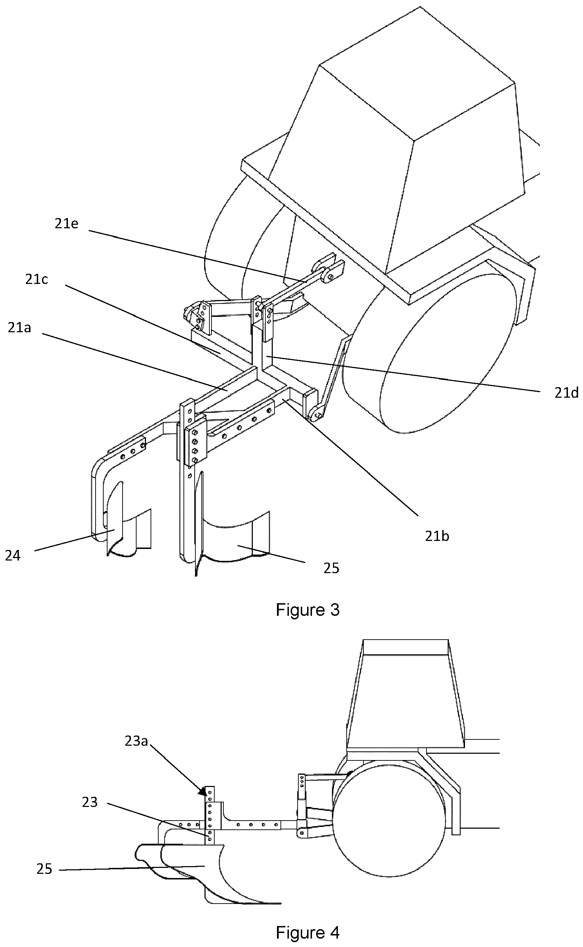

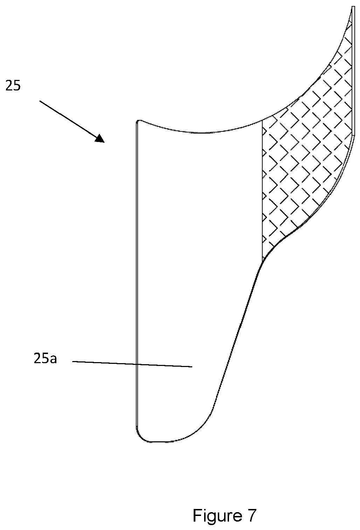

Figure 1 shows a tractor 1 having a connection 11 for connecting the plough 2, which comprises a frame 21, two holders 22, 23, carrying the boards 24, 25 for making a first and second furrow. The second board 25 is elongated into depth, as shown in figure 4, which allows a deeper tillage if compared to ploughing with only the first board 24. Both boards are designed as a plate, wherein the second board 25 is provided with a bottom part 25a that is elongated into depth (figure 7).

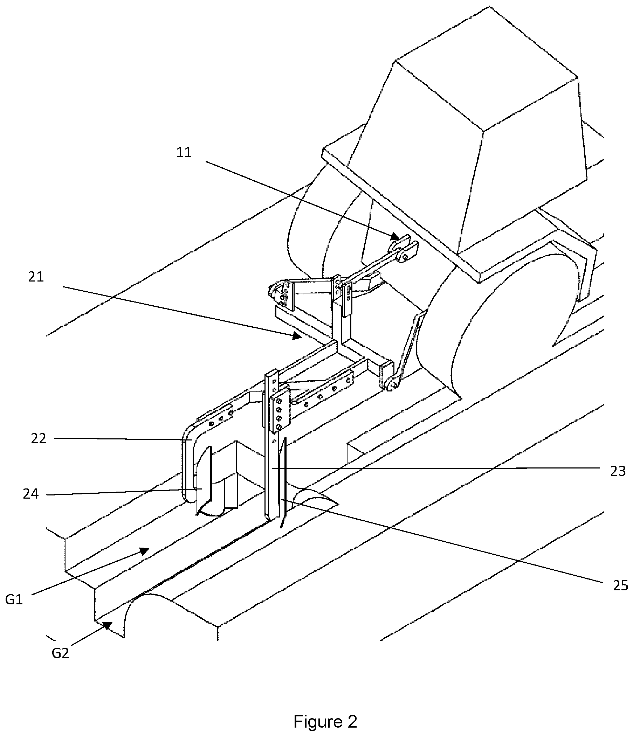

As shown in figure 2, the first board plows to the prva brazda lahko orje do polovice globine, druga pa v naslednjem prehodu že zorano brazdo poglobi. Pri tem prva brazda 24 zasuje globoko brazdo, ki jo je naredila druga brazda 25, z zgornjo zemljino.

Mounting of both boards 24, 25 is shown in figures 2, 3 and 4. The first board 24 is mounted on the first holder 22 with at least one screw received by one of holes on one side of a first horizontal part 21a of the frame 21, and wherein the second board 25 is mounted on the second holder 23 with at least one screw received by one of holes on one side of a second horizontal part 21b of the frame 21. The horizontal parts 21a are joined to a transverse part of the frame 21c, which has a connected vertical part 21d in the middle, wherein the vertical part 21d is with the connecting part 21e mountable on the tractor.

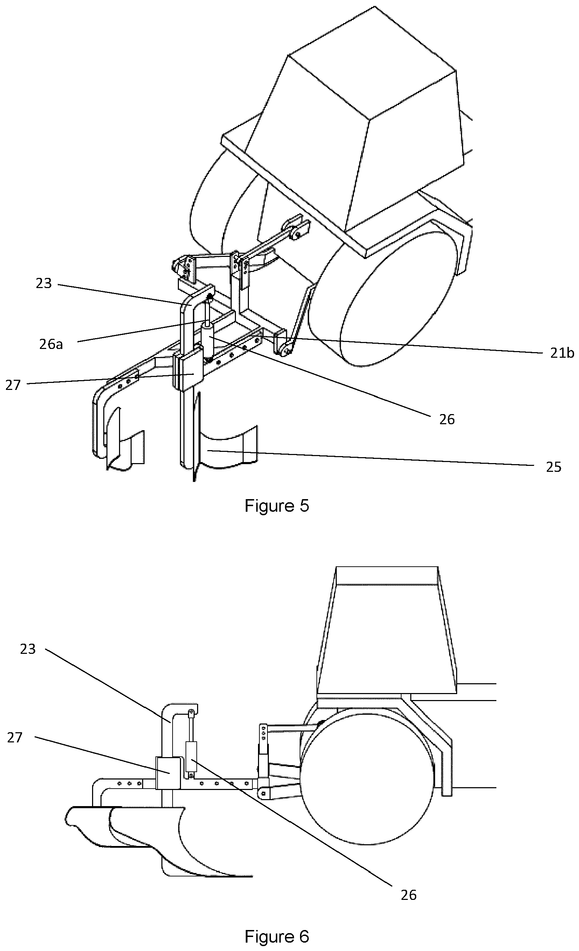

At least one board is height-adjustable with any suitable mechanism for adjusting height. According to a first possible embodiment, the holder is provided with a plurality of holes 23a on the holder 23, so that the board can be screwed into any of these openings on the holder in order to adjust its height and tillage depth as shown in figures 2 to 3. According to a second possible embodiment, the height of boards is adjusted with any hydraulic system, as shown in figures 5 and 6. A hydraulic cylinder 26 is mounted on a horizontal part 21b of the frame 21 and the holder 23 of the board 25, so that the board 25 is liftable due to movement of a cylinder 26a of the hydraulic cylinder 26. The hydralic cylinder 26 is suitably controlled and if needed, connected into a hydraulic system in any known manner. The holder 23 is installed in a suitable guide 27 enabling smooth movement upwards and downwards.

## Claims

1. A plough for deep tillage designed as a double-furrow plough comprising a first board (24) and a second board (25), wherein the first board (24) has a usual size and the second board (25) is elongated into depth to allow tillage at two different depths.

2. The plough for deep tillage according to claim 1, wherein both boards (24, 25) are designed as a plate, wherein a lower part (25a) of the second board (25) is elongated into depth and thus larger than the first board (24).

3. The plough for deep tillage according to claim 2, wherein both boards (24, 25) are mounted each on its own holder (22, 23), which is mounted on a frame (21) arranged for installation on a tractor, preferably with a connecting part (21e).

4. The plough for deep tillage according to any of the preceding claims, wherein at least one of the boards (24, 25) has adjustable height.

5. The plough for deep tillage according to claim 4, wherein both boards (24, 25) have adjustable height.

6. The plough for deep tillage according to claim 4 or 5, wherein for height adjustment the holder (22, 23) is provided with a plurality of openings for installation of the board (24, 25) to allow screwing of the board into any of the openings thus defining the height of tillage.

7. The plough for deep tillage according to claim 4 or 5, wherein height adjustment of the board (24, 25) is achieved with a hydraulic system.

8. The plough for deep tillage according to claim 7, wherein a hydraulic cylinder (26) is mounted on a horizontal part (21b) of the frame (21) and the holder (23) of the board (25), so that the board (25) is liftable due to movement of a cylinder (26a) of the hydraulic cylinder (26).

9. The plough for deep tillage according to claim 8, wherein the holder (23) is installed in a suitable guide (27) enabling smooth movement upwards and downwards.

10. The plough for deep tillage according to any of the preceding claims, wherein the first board (24) is mounted on the first holder (22) with at least one screw received by one of holes on one side of a first horizontal part (21a) of the frame (21), and wherein the second board (25) is mounted on the second holder (23) with at least one screw received by one of holes on one side of a second horizontal part (21b) of the frame (21).

11. The plough for deep tillage according to any of the preceding claims, wherein the horizontal parts (21a) are joined to a transverse part of the frame (21c), which has a connected vertical part (21d) in the middle, wherein the vertical part (21d) is with the connecting part (21e) mountable on the tractor.

12. A tractor comprising the plough for deep tillage according to any of the preceding claims.
